**Europäisches Patentamt**

**European Patent Office**

**Office européen des brevets**

(19)

(11) Veröffentlichungsnummer: **0 199 674**

**A1**

(12) **EUROPÄISCHE PATENTANMELDUNG**

(21) Anmeldenummer: **86810169.2**

(22) Anmeldetag: **10.04.86**

(51) Int. Cl.⁴: **B 01 D 53/20**
**F 28 F 25/08**

(30) Priorität: **16.04.85 CH 1608/85**

(43) Veröffentlichungstag der Anmeldung:
**29.10.86 Patentblatt 86/44**

(84) Benannte Vertragsstaaten:
**AT BE CH DE FR GB LI NL**

(71) Anmelder: **CIBA-GEIGY AG**
**Klybeckstrasse 141**
**CH-4002 Basel(CH)**

(72) Erfinder: **Wymann, Paul**
**Hebelstrasse 101**
**CH-4056 Basel(CH)**

(72) Erfinder: **Fattinger, Volker, Dr.**
**Im Lee 39**
**CH-4144 Arlesheim(CH)**

(54) **Füllkörper aus säurefestem Kunststoff.**

(57) Zwecks leichter und einfacher Herstellbarkeit, hoher Steifigkeit und großer spezifischer Oberfläche besteht der Füllkörper (6, 10, 20) aus einer ringförmigen Zellenstruktur. Sämtliche Zellenwände sind senkrecht zur Ringebene (CP, CP') und so gerichtet, daß ihre gedachten Schnittlinien miteinander alle parallel sind. Die Außenwand (1, 11, 21) des Ringes kann rund, z.B. kreisrund oder elliptisch oder auch mehreckig oder dergleichen sein. Die Höhe der Zellwände senkrecht zur Ringebene (CP, CP') kann konstant sein oder von innen nach außen abnehmen.

Fig. 3

EP 0 199 674 A1

Croydon Printing Company Ltd

CIBA-GEIGY AG                                    7-15319

Basel (Schweiz)


## Füllkörper aus säurefestem Kunststoff

Die Erfindung betrifft einen Füllkörper gemäß Oberbegriff des Patentanspruchs 1.

Es existieren viele Formen von Füllkörpern, welche zur Verbesserung des Stoffaustausches zwischen Gasströmen und Flüssigkeiten Anwendung finden. Weit verbreitet sind z.B. Raschig-Ringe, Pall-Ringe, Berl-Sättel, Flachdreieck-Körper und andere Formen.

In der chemischen Verfahrenstechnik gibt es Anwendungsgebiete für Füllkörper, bei denen es auf eine möglichst große Oberfläche ankommt. Bei Oberflächen von mehr als 250 m²/m³ Gas-Flüssigkeitskontaktraum liegt die Stückzahl meistens über 50'000, woraus entsprechend hohe Herstellungskosten resultieren. Bei Füllkörpern aus Metall ist es möglich, sehr dünne Bleche zu verwenden, wodurch das freie Volumen über 94% beträgt. Füllkörper aus säurefesten Metallen sind aber sehr teuer, wenn große Oberflächen und entsprechend große Stückzahlen notwendig sind.

Es gibt Gasreinigungsverfahren, bei denen man mit Füllkörperschichthöhen von mehr als 5 m arbeitet und auf Füllkörper aus Keramik oder aus Kunststoff angewiesen ist. Als Beispiel eines solchen Verfahrens wird auf das Stickoxid-Schwefelsäure-Verfahren verwiesen, wie es z.B. in folgenden Literaturstellen beschrieben wird:

0199674

- 2 -

Jllmanns Enzyklopädie der technischen Chemie, 4. neubearbeitete und erweiterte Auflage, Verlag Chemie, Weinheim, Band 21 (1982), S. 148.
Ciba-Geigy Corporation, US-Patent Nr. 4 242 321 (1980)
Ciba-Geigy Corporation, US-Patent Nr. 4 148 868 (1979).

r untere Teil der Füllkörperschüttung ist einem relativ hen Druck ausgesetzt, welcher aus dem Gewicht der übergegerten Füllkörper und zusätzlich aus dem Gewicht der Beeselungssäure resultiert. Preisgünstige säurebeständige nststoffe (z.B. aus Polyäthylen) sind bei den Betriebsmperaturen bereits relativ weich, wenn sie zu dünnwandin Füllkörpern verarbeitet werden müssen.

ı der Denitrierzone eines Stickoxid-Schwefelsäuresystems ınnen Temperaturen bis zu 120°C herrschen. Füllkörper aus ᴜor-Kohlenwasserstoffen wie z.B. Polyvinylidenfluorid ᴉnd zwar chemisch beständig, können jedoch zu vertretbaren ⁚eisen nur dann zur Anwendung kommen, wenn es gelingt, die ᵣrper ᵣ aus extrem dünnem Material herzustellen. Ziel der ᵣfindung ist ein billig aus säurefesten Kunststoffen her-ᵣellbarer, formbeständiger Füllkörper mit großer Ober-ᴌäche, kleinem Materialbedarf und genügender Steifheit, ɔbei eine einen m³ bei regelloser Schüttung ausfüllende ᵣnge solcher Füllkörper mehr als 250 m²/m³ Oberfläche auf-ᵣisen soll.

ies wird gemäß der Erfindung durch einen Füllkörper der ingangs beschriebenen Art erfüllt, der dadurch gekenn-ᵣeichnet ist, daß mehr als 80% der Oberfläche des Füllkör-ᵣers aus Flächen von derart zueinander gelagerten Wänden ᵣbildet werden, daß diese Wände in mindestens einer An-ᵣicht des Füllkörpers sich als gerade oder gekrümmt und ᵣon einer Dicke, die der Materialstärke des Kunststoffes ᵣntspricht, projizieren, wobei ferner eine Außenwand des ᵣüllkörpers, die fähig ist, innerhalb einer Füllkörperschüttung eine höhere Druckbelastung als die der darüber liegenden Füllkörperschichten auszuhalten, in Zellenbauweise mit zur Außenwand querverlaufenden Trennwänden ausgebildet ist, und daß die Achsen der für den Durchtritt von Gas beidseitig offenen Zellen und die Schnittlinien der Seitenwände mit der Außenwand miteinander parallel verlaufen.

Die Außenwand des Füllkörpers nach der Erfindung kann entlang einer Hauptebene des Füllkörpers in sich geschlossen mit runder, vorzugsweise kreisförmiger oder elliptischer, oder auch mit mindestens angenähert vieleckiger, z.B. drei-, vier-, fünf-, sechs- oder mehreckiger Gestaltung ihres Grundrisses verlaufen. Die Dicke aller Zellenwände oder eines Teiles der Zellenwände wird dabei kleiner als 0,8 mm oder sogar 0,5 mm und in speziellen Fällen sogar kleiner als 0,3 mm gewählt.

Weitere Einzelheiten und Vorteile des Füllkörpers nach der Erfindung ergeben sich aus der folgenden Beschreibung verschiedener Ausführungsformen desselben im Zusammenhang mit der beigefügten Zeichnung, in welcher

Fig. 1 eine Seitenansicht einer bevorzugten Ausführungsform des erfindungsgemäßen Füllkörpers,

Fig. 2 einen Querschnitt der gleichen Ausführungsform in einer in Fig. 1 durch II-II angedeuteten Ebene;

Fig. 3 eine Teilansicht in einem perspektivischen Axialschnitt durch die gleiche Ausführungsform, dessen Schnittebene in Fig. 2 durch III-III angedeutet ist,

Fig. 4 eine Seitenansicht einer weiteren Ausführungsform des erfindungsgemäßen Füllkörpers,

- 4 -

Fig. 5   einen Querschnitt durch die Ausführungsform von

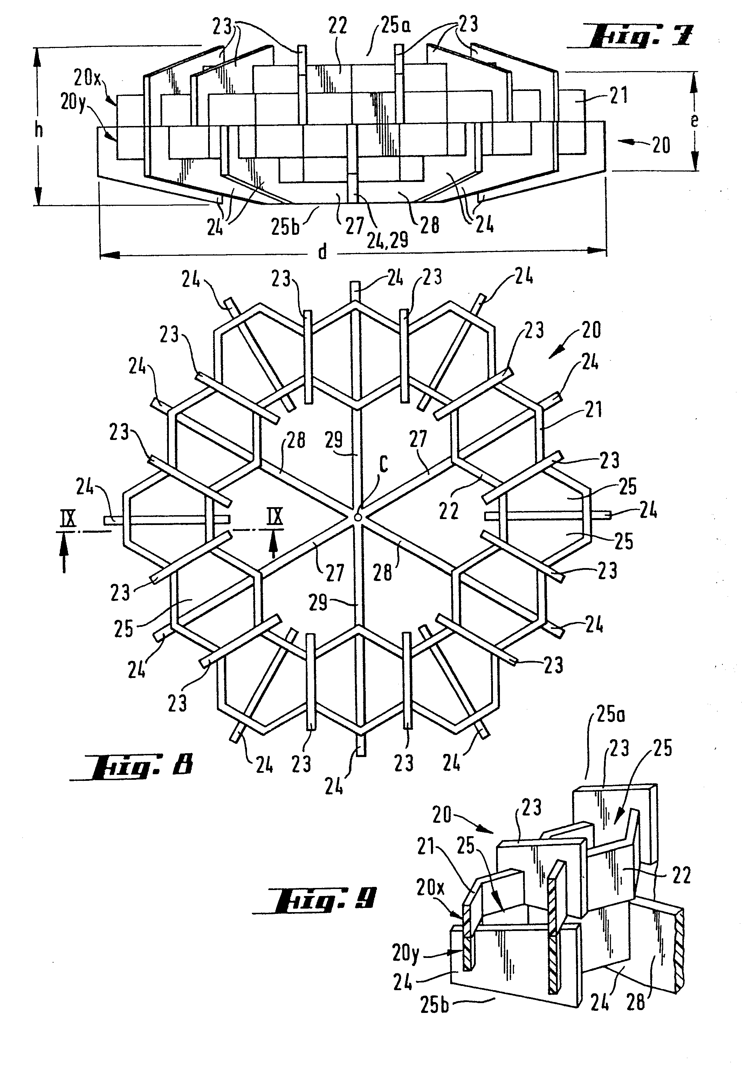

Fig. 4, dessen Schnittebene in Fig. 4 durch V-V
angedeutet ist,

Fig. 6   eine Teilansicht in einem perspektivischen Axialschnitt
durch die Ausführungsform nach Figuren 4 und 5, dessen
Schnittebene in Fig. 5 durch VI-VI angegeben ist,

Fig. 7   eine Seitenansicht einer dritten Ausführungsform
des erfindungsgemäßen Füllkörpers,

Fig. 8   eine Draufsicht auf den Füllkörper nach Fig. 7 und

Fig. 9   eine Teilansicht in einem perspektivischen Axialschnitt
durch diese dritte Ausführungsform, dessen Schnittebene
in Fig. 8 durch IX-IX angedeutet ist.

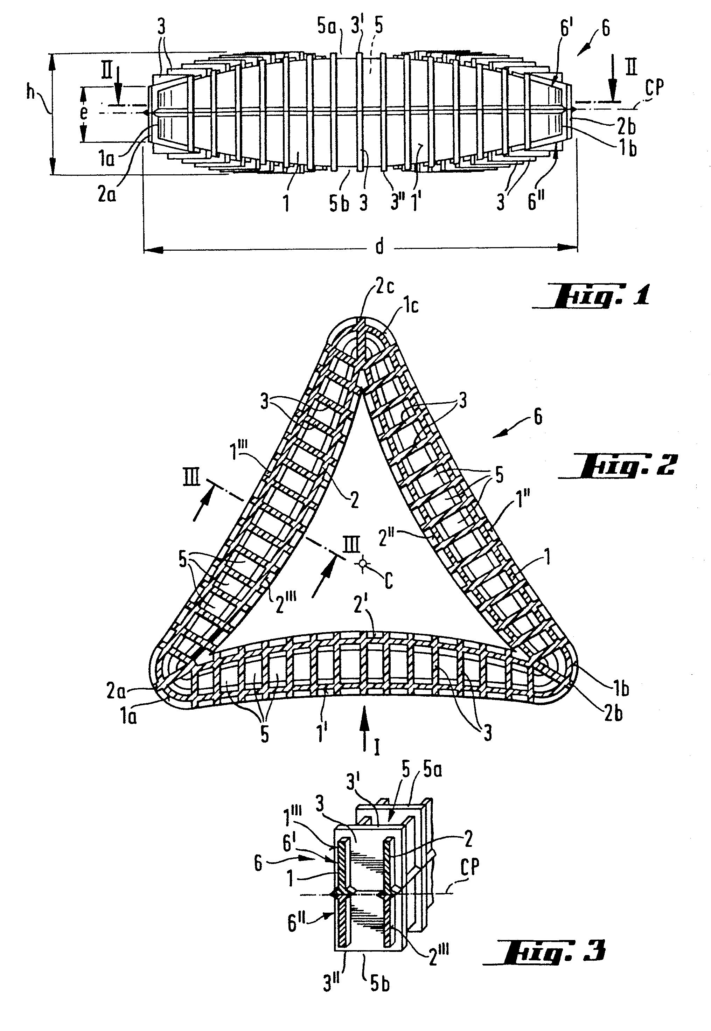

Die in Figuren 1 bis 3 dargestellte Ausführungsform des
Füllkörpers nach der Erfindung umfaßt eine umlaufende
Außenwand 1, die einen Querschnittsumriß von grundlegend
dreieckiger Gestalt besitzt und drei Eckbereiche 1a, 1b
und 1c aufweist. Die seitlichen Wandabschnitte 1', 1" und
1''' der Außenwand 1 zwischen diesen Eckbereichen sind
leicht  nach der Körpermitte zu konkav-gekrümmt.

Das Innere des Dreiecks umfaßt eine Innenwand 2, die aus
drei Wandteilen 2', 2" und 2''' besteht, deren Enden in
Endstücken 2a, 2b und 2c etwas aus den Eckbereichen 1a,
1b bzw. 1c herausragen. Jeder der Innenwandabschnitte 2',
2" und 2''' hat konkave Gestalt, wobei seine Krümmung etwas
stärker ist als diejenige der Abschnitte der Außenwand 1.

In der Ausführungsform nach Figuren 1 bis 3 ist die Höhe
der Wände 1 und 2 am größten in der Mitte jedes Wandabschnitts zwischen den Eckbereichen 1a, 1b und 1c und am
niedrigsten in diesen Eckbereichen, wie aus Fig. 1 ersichtlich ist.

- 5 -

Die Außenwandabschnitte 1', 1" und 1'" sind mit den benachbarten Innenwandabschnitten 2', 2" bzw. 2'" durch
querverlaufende Trennwände 3 verbunden, die jeden der
Zwischenräume zwischen den Wandabschnitten 1' und 2',
zwischen 1" und 2", bzw. zwischen 1'" und 2'" in Zellen 5
unterteilen, die am Kopfende 5a und am Bodenende 5b des
Füllkörpers 6 offen sind.

Der resultierende Füllkörper 6 kann z.B. aus dem obenerwähnten Kunststoff in zwei Hälften 6' und 6" hergestellt
werden, die miteinander verklebt oder verschweißt werden
können, so daß die Trennwandhälften 3' der oberen Füllkörperhälfte 6' mit den entsprechenden Trennwandhälften
3" in der unteren Füllkörperhälfte 6" fluchten und so jeweils die gesamte Trennwand 3 entsteht.

Die obere Füllkörperhälfte 6' und die untere Füllkörperhälfte 6" können miteinander längs einer gemeinsamen in
einer gemeinsamen Mittelebene CP verlaufenden Trennfuge
verklebt oder verschweißt werden, wo immer die Hälften der
Wände 1, 2 und 3 übereinander gestellt werden und sich berühren bzw. kreuzen.

In der zweiten, bevorzugten Ausführungsform, die in Figuren
4 bis 6 dargestellt ist, verläuft die endlose Außenwand 11
des Füllkörpers in annähernd dreieckiger Gestalt zwischen
konvex gekrümmten Eckbereichen 11a, 11b und 11c, und die
Innenwand 12 ist aus einwärts, d.h. zur Füllkörpermitte
hin gekrümmten (konkaven) Wandabschnitten 12', 12" und 12'",
die in ihren Endstücken 12a, 12b bzw. 12c miteinander verschweißt ·sind, /Diese Endstücke ragen etwas über die Außenwand 11 in den Eckbereichen hinaus.

Der Füllkörper 10 ist vorzugsweise aus einer oberen Hälfte
10x und einer unteren Hälfte 10y zusammengesetzt, die miteinander an der Trennfuge CP' verklebt oder verschweißt

erden können, in der die äußeren und inneren Halbwände
lx und 12x der Wände 11 und 12 auf den unteren Außen- und
nnenhalbwänden 11y bzw. 12y aufsitzen.

n der oberen Hälfte 10x des Füllkörpers 10 ist der Zwichenraum zwischen jedem Abschnitt der Außen- und der Inenwand, also z.B. zwischen 11' und 12', oder zwischen 11"
nd 12", oder schließlich zwischen 11''' und 12''' in eine Anahl Zellen 15 durch querverlaufende Trennwände 13 untereilt, die nach unten mit den unteren Rändern der oberen
älften 11x und 12x der Außenwand 11 bzw. der Innenwand 12
luchtend an der Trennfuge CP' enden. Nach oben hin ragen
ie beträchtlich über die oberen Ränder 11u und 12u der
beren Wandhälften 11x bzw. 12x hinaus (siehe Fig. 6).

Jm die zu Grunde liegende dreieckige Anordnung des Füllkörpers 10 zu stabilisieren, sind die einem Endbereiche
lla, 11b und 11c am nächsten und übernächsten gelegenen
Trennwände 13' und 13" Winkelstücke, die sich über die beilen am Eckbereich anschließenden Zwischenräume erstrecken,
während die zwischen den Eckbereichen nach der Mitte der
Dreieckseiten gelegenen Trennwände 13 nur genügend lang
sind, um einen der Zwischenräume und nicht auch den diesem
benachbarten in der oberen Füllkörperhälfte zu überbrücken.

Entsprechend ist in der unteren Füllkörperhälfte der Zwischenraum zwischen nebeneinander liegenden Abschnitten der
Außen- und Innenwand in den genannten Bereichen 11', 12',
oder 11", 12", oder auch 11''', 12''' in eine Anzahl Zellen
durch querverlaufende Trennwände 14 unterteilt, die nach
oben hin an der Ebene der Trennfuge CP' zwischen der oberen
und unteren Füllkörperhälfte 10x, bzw. 10y mit den oberen
Rändern der unteren Wandhälften 11y bzw. 12y der Außen-
bzw. der Innenwand, 11 bzw. 12, fluchtend enden. Nach unten erstrecken sich die Querwände 14 ein gutes Stück über
die unteren Ränder 11w bzw. 12w der unteren Wandhälften
11y bzw. 12y hinaus (siehe Fig. 6).

Die Querwände 13 und 14, in der oberen bzw. der unteren
Füllkörperhälfte 10x bzw. 10y, fluchten nicht miteinander,
wie dies bei der vorangehend beschriebenen Ausführungsform
bei den Trennwandhälften 3' und 3" der Fall ist. Vielmehr
sind die Trennwände 13 in Bezug auf die Trennwände 14 verschoben, so daß sich eine gestaffelte Anordnung der Zellen
bzw. der Querwände 13 und 14 ergibt.

In der in den Figuren 4 bis 6 gezeigten Ausführungsform
sind z.B. in jedem Abschnitt zwischen den Wandungsbereichen 11a und 11b, bzw. 11b und 11c, bzw. 11a und 11c sechs
Trennwände 13 in der oberen Füllkörperhälfte 10x und sieben Trennwände 14 in der unteren Hälfte 10y vorgesehen,
wobei sich jede Trennwand 13 quer über den Zwischenraum
zwischen den entsprechenden, nebeneinander liegenden Abschnitten der Außenwand 11 und der Innenwand 12 in einer
Zone erstreckt, die sich gestaffelt zwischen zwei benachbarten der darunter liegenden Trennwände 14 und in parallelen Ebenen mit diesen erstreckt.

Um den Füllkörper 10 in seiner beschriebenen Gestalt zu
stabilisieren, sind die jedem der Eckbereiche 11a, 11b
und 11c am nächsten gelegenen und auch die übernächste
Trennwand 14 Winkelstücke, die die beiden in den betreffenden Eckbereich benachbart hineinragenden Zwischenräume
einstückig durchqueren.

Auch können die die Mitten der Abschnitte 11', 11" und
11'" der Außenwand und die  entsprechenden Abschnitte der
Innenwand 12 durchquerenden Trennwände 14 in der Mitte
des Füllkörpers miteinander fest verbunden sein und so
eine einstückige Dreiflanschtrennwand 14z bilden.

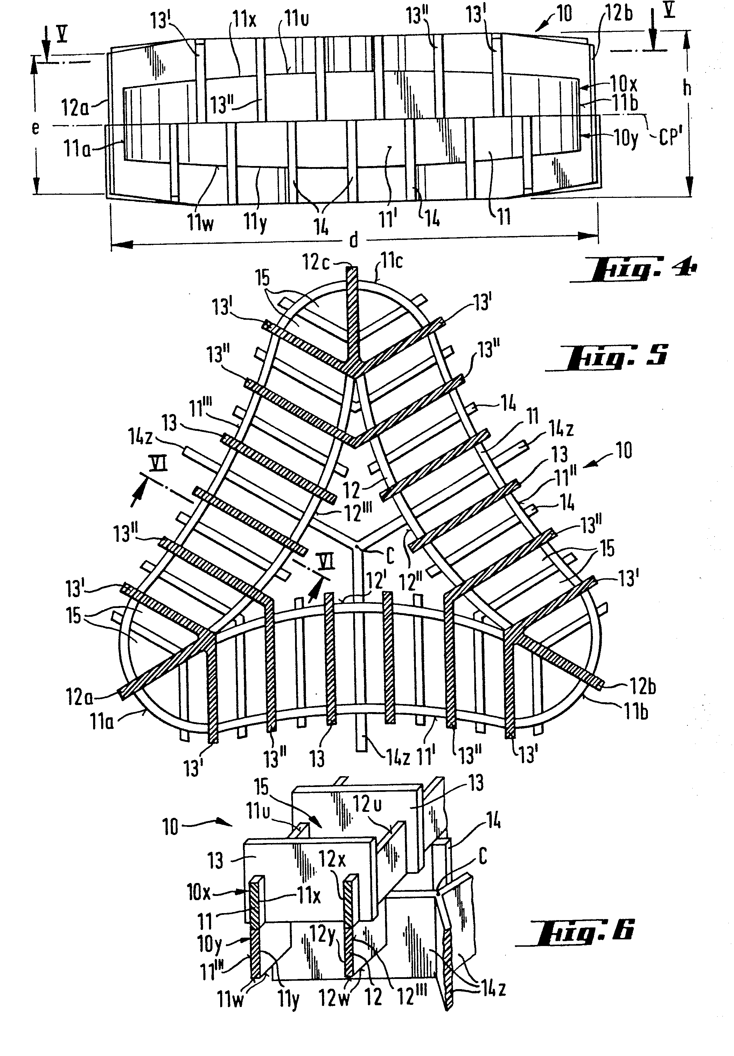

Im Innenraum des Füllkörpers 10 oder des weiter unten beschriebenen Füllkörpers 20 können auch noch weitere Versteifungswände oder -stege (nicht gezeigt) vorgesehen

- 8 -

sein, die sich in Bezug auf die durch die Mitte C des
Füllkörpers normal zur Ebene, in der die Querschnittansichten der Figuren 2 bzw. 5 liegen, verlaufende Mittelachse axial oder radial erstrecken. Solche Versteifungswände oder -stege erhöhen ebenfalls vorteilhaft die Gesamtoberfläche der Füllkörper, dürfen aber deren Herstellung nicht erschweren.

Natürlich kann an Stelle der zu Grunde liegenden dreieckigen Gestaltung der in Figuren 2 und 5 gezeigten Ausführungsformen auch eine kreisförmige oder eine andere runde,
z.B. eine elliptische Anordnung gewählt werden, oder diese
kann quadratisch, fünfeckig usw. sein. So ist z.B. in der
im folgenden beschriebenen, in den Figuren 7 bis 9 dargestellten Ausführungsform eine sechseckige Anordnung gewählt.

In dieser weiteren in Figur 7, 8 und 9 gezeigten Ausführungsform liegt dem Füllkörper 20 nach der Erfindung also
ein Querschnitt von sechseckiger Anordnung zu Grunde, wobei der Füllkörper eine äußere Seitenwand 21, eine innere
Wand 22 und in der oberen bzw. der unteren Füllkörperhälfte, 20x bzw. 20y, quer zu diesen Wänden verlaufende
Trennwände 23 und 24 aufweist, die den ringförmigen Zwischenraum zwischen der Außenwand 21 und der Innenwand 22
in Zellen 25 unterteilen, die am oberen Füllkörperende 25a
und an dessen unterem Ende 25b offen sind.

In dieser Ausführungsform ist die Höhe der in sich geschlossenen Außenwand 21 niedriger als diejenige der Innenwand 22 (Fig. 9).

Um diesen Füllkörper zu verstärken, sind Trennwände 27,
28 und 29, die sich als durchlaufende radiale Querwände
durch die Füllkörpermitte C erstrecken und in ihr starr
miteinander verbunden sind, so daß sie ein einstückiges
Trennelement mit sechs Flanschen ergeben, vorgesehen.

Es ist leichter, die Füllkörper nach der Erfindung in zwei
Hälften herzustellen, mit Ausnahme der Ausführungsform
nach Figuren 1 bis 3, die ebensogut in einem einzigen
Stück hergestellt werden kann.

Vorteilhaft werden die Füllkörper als relativ flache Gebilde gestaltet, wobei die Höhe h des Füllkörpers kleiner
ist als seine Breite d. Es erwies sich als zweckmäßig, um
besseren Widerstand gegen Abbrechen von Ecken unter Druck
zu erreichen, die Höhe h des Füllkörpers im Zentrum des
Körpers größer zu wählen als in den Außenbereichen (Höhe e).

Je größer die Anzahl der Zellen zwischen der umlaufenden
Außen- und der Innenwand ist, desto größer ist auch die
Gesamtoberfläche des Füllkörpers. So erwies es sich als
vorteilhaft, in jedem der Zwischenräume zwischen der Außen-
und der Innenwand bei einer zu Grunde gelegten Dreiecksanordnung mindestens acht bis neun Zellen vorzusehen, d.h.
insgesamt 24 bis 27 Zellen, die den Innenraum des Füllkörpers umgeben. Eine Mindestzahl von 15 oder besser noch
21 Zellen wird unabhängig vom Grundriß der Außenwand als
an sie nach innen anschließende Zellstruktur empfohlen.

- 10 -

Patentansprüche

1. Füllkörper aus säurefestem Kunststoff, wobei eine Anzahl davon in regelloser Schüttung pro m³ Füllvolumen insgesamt mehr als 250 m² Oberfläche aufweisen, dadurch gekennzeichnet, daß mehr als 80% der Oberfläche aus Wandflächen von derart zueinander gelagerten Wänden (1,2,3) gebildet werden, daß diese Wände in mindestens einer Ansicht des Füllkörpers (6) sich als gerade oder gekrümmt projizieren, von einer Dicke, die der Materialstärke des blattförmigen Kunststoffes entspricht, und daß die in sich geschlossene dreieckige, viereckige, mehreckige, runde, ellipsoide oder andersförmige Außenwand (1) des Füllkörpers (6), welche innerhalb einer Füllkörperschüttung einer Druckbelastung ausgesetzt ist, in Zellenbauweise ausgeführt ist, derart, daß die Achsen in Strömungsrichtung der für den Gasdurchtritt offenen Zellen (5) und die Schnittlinien der Zellentrennwände (3) mit der Außenwand (1) miteinander parallel verlaufen.

2. Füllkörper nach Anspruch 1, dadurch gekennzeichnet, daß die in sich geschlossene Außenwand (1) ein Innenfeld mit einer Mitte (C), durch die eine Mittelachse zum Innenfeld normal verläuft, umschließt und daß der Füllkörper (6) in Richtung der Mittelachse eine Höhe (h) aufweist, die erheblich kleiner ist als der größte Durchmesser (d) des Füllkörpers in einer sich zur Mittelachse normal erstreckenden Ebene.

3. Füllkörper nach Anspruch 2, dadurch gekennzeichnet, daß die Höhe (h) des Füllkörpers (6) kleiner ist als 1/3 der Breite (d).

4. Füllkörper nach Anspruch 2, dadurch gekennzeichnet, daß der Füllkörper (6) aus zwei Hälften (6', 6") zusammengesetzt ist, von denen jede eine Hälfte der Außenwand und der Zelltrennwände (3', 3") umfaßt, wobei die Füllkörperhälften (10x, 10y) in einer sich normal zur Mittelachse erstreckenden Trennfuge miteinander verbunden sind.

5. Füllkörper nach Anspruch 4, dadurch gekennzeichnet, daß die sich in Durchströmungsrichtung erstreckenden Achsen der Zellen (15) in einer der genannten Hälften (10x, 10y) seitlich verschoben gegenüber den Zellachsen in der anderen Füllkörperhälfte, aber mit ihnen parallel verlaufen.

6. Füllkörper nach einem der Ansprüche 2 bis 5, dadurch gekennzeichnet, daß die genannte Höhe (h) von der Mittelachse aus nach dem äußeren Umfang des Füllkörpers (6) zu abnimmt.

7. Füllkörper nach Anspruch 2, dadurch gekennzeichnet, daß im Inneren des Füllkörpers eine oder mehrere zusätzliche Versteifungswände oder -stege vorgesehen sind.

8. Füllkörper nach einem der Ansprüche 1 bis 7, dadurch gekennzeichnet, daß die Wände innerhalb der Außenwand eine Innenwand (2, 12, 22) umfassen, die sich parallel zur Mittelachse erstreckt.

9. Füllkörper nach Anspruch 8, dadurch gekennzeichnet, daß der Abstand der Innenwand (2, 12, 22) von der Außenwand (1, 11, 21) über den Umfang der letzteren hin verschieden ist.

10. Füllkörper nach Anspruch 9, dadurch gekennzeichnet, daß dem Grundriß der Außenwand (1, 11) ein Vieleck, vorzugsweise ein Dreieck oder Sechseck, zu Grunde liegt, und daß die Innenwand (2, 22) die Außenwand in den Eckbereichen des Vielecks (1a, 1b, 1c; 11a, 11b, 11c) berührt und in jeweils der Wandmitte zwischen zwei benachbarten Eckbereichen den größten Abstand von der Außenwand (1, 11) aufweist.

11. Füllkörper nach Anspruch 10, dadurch gekennzeichnet, daß die Außenwand (1, 11) Wandabschnitte (1', 1", 1'''; 11', 11", 11''') zwischen jedem Paar einander benachbarter Eckbereiche (1a, 1b, 1c; 11a, 11b, 11c) aufweist, deren Projektionen auf die zur Mittelachse normale Ebene einwärts gekrümmt sind und der Mittelachse in der Mitte jedes Wandabschnittes am nächsten kommen.

12. Füllkörper nach Anspruch 11, dadurch gekennzeichnet, daß die Innenwand (2, 12) Innenwandabschnitte (2', 2", 2'''; 12', 12", 12''') zwischen den besagten Eckbereichen der Außenwand (1,11) aufweist, deren Projektionen auf die zur Mittelachse normale Ebene stärker zur Mittelachse hin einwärts gekrümmt sind als die einwärts gekrümmten Außenwandabschnitte.

13. Füllkörper nach einem der Ansprüche 1-12, dadurch gekennzeichnet, daß die Dicke aller oder eines Teiles der Wände kleiner als 0,8 mm ist.

14. Füllkörper nach einem der Ansprüche 1-12, dadurch gekennzeichnet, daß die Dicke aller oder eines Teiles der Wände kleiner als 0,5 mm ist.

15. Füllkörper nach einem der Ansprüche 1-12, dadurch gekennzeichnet, daß die Dicke aller oder eines Teiles der Wände kleiner als 0,3 mm ist.

16. Füllkörper nach Anspruch 8, dadurch gekennzeichnet, daß die Trennwände (3; 13, 14; 23, 24) sich quer zur Außenwand (1, 11, 21) und zur Innenwand (2, 12, 22) erstrecken und mindestens einen Zwischenraum zwischen den beiden letztgenannten Wänden in eine Anzahl der besagten Zellen (5, 15, 25) unterteilen.

17. Füllkörper nach Anspruch 16, dadurch gekennzeichnet, daß mehrere der besagten Zwischenräume vorhanden sind, und daß alle Trennwände (3, 13, 14; 23, 24), die einen der Zwischenräume in Zellen unterteilen, miteinander und mit der Mittelachse parallel, aber zu den Trennwänden mindestens eines anderen Zwischenraumes gewinkelt verlaufen.

18. Füllkörper nach Anspruch 16 oder 17, dadurch gekennzeichnet, daß die Anzahl der aneinandergereihten Zellen (5, 15, 25), welche die Außenwand (1, 11, 21) rund um den Füllkörper (6, 10, 20) bilden, größer als 8 ist.

19. Füllkörper nach Anspruch 16 oder 17, dadurch gekennzeichnet, daß die Anzahl der aneinandergereihten Zellen (5, 15, 25), welche die Außenwand (1, 11, 21) rund um den Füllkörper (6, 10, 20) bilden, größer als 15 ist.

20. Füllkörper nach Anspruch 16 oder 17, dadurch gekennzeichnet, daß die Anzahl der aneinandergereihten Zellen (5, 15, 25), welche die Außenwand (1, 11, 21) rund um den Füllkörper (6, 10, 20) bilden, größer als 21 ist.

*Fig. 1*

*Fig. 2*

*Fig. 3*

*Fig. 4*

*Fig. 5*

*Fig. 6*

*Fig: 7*

*Fig: 8*

*Fig: 9*

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 093 728  (AALTOSEN TEHTAAT OY) <br><br> * Abbildungen 1,2;  Seite 2, Zeilen 3-31; Patentansprüche * <br><br> --- | 1,2,3, 6,18, 19 | B 01 D 53/20 <br> F 28 F 25/08 |
| A | DE-A-2 738 362  (ACALOR INTERNATIONAL LTD.) <br> * Abbildungen 1-4; Seite 11, Zeilen 1-26; Seite 9, letzter Absatz - Seite 10, erster Absatz * <br><br> ----- | 1,4 | |

**RECHERCHIERTE SACHGEBIETE (Int. Cl.4)**

B 01 D  53/00
F 28 F  25/00
C 02 F   3/00

Der vorliegende Recherchenbericht wurde für alle Patentansprüche erstellt

| Recherchenort | Abschlußdatum der Recherche | Prüfer |
|---|---|---|
| DEN HAAG | 30-07-1986 | BOGAERTS M.L.M. |